# EUROPEAN PATENT SPECIFICATION

(11) **EP 2 500 638 B1**
(45) Date of publication and mention of the grant of the patent: **20.06.2018**
(21) Application number: 12151068.9
(22) Date of filing: 13.01.2012
(51) Int. Cl.: F21V 31/03, F21S 41/50, B60Q 1/26, B60Q 1/00, B62J 6/02, F21S 45/33

(54) **Headlamp device**
Scheinwerfervorrichtung
Dispositif de phare

(30) Priority: 18.03.2011 JP 2011060240
(43) Date of publication of application: 19.09.2012
(73) Proprietor: Honda Motor Co., Ltd., Tokyo 107-8556 (JP)
(72) Inventor: Ochiai, Kazuyuki, Saitama 351-0193 (JP); Shimizu, Norifumi, Saitama 351-0193 (JP); Sekine, Tasuku, Saitama 351-0193 (JP)
(74) Representative: Rupp, Christian

(56) References cited:
- EP-A2- 2 071 229
- DE-A1- 19 933 766
- JP-A- 6 267 305
- JP-A- 7 057 512
- JP-A- 2003 081 154
- US-A- 5 021 930

## Description

The present invention relates to a headlamp device including a headlight light source and a position-light light source.

Patent Document 1 discloses a headlamp structure (device) in which a headlight bulb (headlight light source) and position light bulbs (position-light light sources) are provided in one unit. In this headlamp device, the position light bulbs are disposed on vehicle-width-directionally outer upper sides of the headlight bulb, and reflectors (a vertical wall portion and an upper wall surface) are provided on the front and rear sides of the position light bulb. The reflectors reflect the light emitted from the position light bulb, whereby the light in a predetermined quantity is radiated as position light to the outside of the headlamp device.

Patent Document 2 discloses an automotive headlamp that includes a lamp body, a reflector, a light source and an inner lens that is provided in front of an outer lens, wherein the inner lens is formed with an air path. Patent Document 3 discloses a light unit that has an aperture frame with reflector chambers in two stacked planes with the chamber for the flasher light beneath the chambers for dipped and main beams and/or for signaling lights, a cover panel and an arrangement for ventilating the inner volume.

Patent Document 4 discloses a vehicular headlamp including two lamp units and an extension for covering gaps among a lamp body and the lamp units.

Patent Document 5 discloses a headlamp for automobile comprising an inner cover that is extended between projection lamps and a lamp body to cover a lamp chamber. Furthermore, the headlamp is provided with an air inflow hole and air outflow hole for forming natural convection in the lamp chamber at the right and left positions on the back face side of the lamp chamber.

Patent Document 1: JP 2009-238412 A
Patent Document 2: US 5 021 930 A
Patent Document 3: DE 199 33 766 A1
Patent Document 4: EP 2 071 229 A2
Patent Document 5: JP 6 267305 A

Meanwhile, in a headlamp device, during when a headlight and position lights are turned on, heat is generated attendantly on the emission of light from the headlight bulb and the position light bulbs. Especially, from the headlight radiating a large quantity of light, a large quantity of heat is transmitted to air present in the internal space of the headlamp device, and the heat stagnates in the internal space. As a result, water contained in the air in the internal space is warmed up to cause fogging (deposition of water droplets) on a lens. The fogging on the lens lowers the quantity of light emitted when the headlamp device is on. In particular, where an intermediate cover member (intermediate member) for hiding a base member in the surroundings of the reflectors is provided, the space inside the headlight is reduced and, therefore, the influence of the fogging becomes further conspicuous.

In addition, in a headlamp device including both a headlight bulb and position light bulbs, the heat of the headlight bulb and the heat of the position light bulbs are locally concentrated in a certain part, which may cause a deformation at the part under the influence of the heat.

The present invention has been made in consideration of the above-mentioned circumstances. Accordingly, it is an object of the present invention to provide a headlamp device in which fogging on lens in the headlamp device can be restrained and deformation of members constituting the headlamp device can be prevented by promoting release of heat from within the internal space of the headlamp device, while using a simple configuration.

According to the invention in claim 1, a headlamp device (10) including: a base member (100) on which to dispose a headlight light source (106) and a position-light light source (108); a lens (102) mounted to a front portion of the base member (100); a reflector (122) which is disposed in an internal space (114) defined by the base member (100) and the lens (102) and which reflects light emitted by the headlight light source (106); and an intermediate member (130) which covers the base member (100) at least in the surroundings of the reflector (122) in front view, is characterized in that the intermediate member (130) is provided with a cutout (144) which permits a gas present on the lens (102) side relative to the intermediate member (130) to flow therethrough to the base member (100) side relative to the intermediate member (130). Furthermore, the headlamp device is characterized in that an upper edge part (100a) of the base member (100) is formed to be hollowed in a central portion thereof, and both left and right edges continuous with the central portion are inclined obliquely upward. A lower edge part (100b) is smaller in width than the upper edge part (100a), and is slowly inclined obliquely upward along vehicle-width-directionally outward directions.
A pair of left and right side edge parts (100c, 100c) are inclined obliquely downward along vehicle-width-directionally outward directions from top portions (100d, 100d) continuous with the upper edge part (100a), are bent at side end portions (100e, 100e) and are inclined obliquely downward toward the center, to be continuous with the lower edge part (100b).

According to the invention in claim 2, the headlamp device (10) according to claim 1 is characterized in that the intermediate member (130) is disposed in the internal space (114) so as to form a predetermined gap (164) between itself and the reflector (122).

According to the invention, the headlamp device (10) is characterized in that the base member (100) has a gas supply hole (148, 150) for taking a gas into the internal space (114) and a gas exhaust hole (152, 154, 156) for exhausting the gas from inside the internal space (114), and the intermediate member (130) ensures that the gas taken in through the gas supply hole (148, 150) and moved to the lens (102) side can be guided through the cutout (144) to the gas exhaust hole (152, 154, 156).

Moreover, two cutouts (144) are provided on the upper side of said headlight light source (106) and are provided on the outer side of the intermediate member (130) in the vehicle width direction, so as to be close to the pair of left and right side edge parts (100c, 100c).

According to the invention, the headlamp device (10) is further characterized in that the gas supply hole (150) is provided on the lower side of the base member (100), and the gas exhaust hole (152, 154, 156) is provided on the upper side of the base member (100).

According to the invention in claim 3, the headlamp device (10) according to any one of claims 1 to 2 is characterized in that the intermediate member (130) has a partition wall (146) on an imaginary straight line interconnecting the headlight light source (106) and the position-light light source (108), and the partition wall (146) shieldingly prevents radiant heat generated from the headlight light source (106) or the position-light light source (108) from being propagated directly toward other light source.

According to the invention in claim 1, the cutout ensures that the gas present on the lens side relative to the intermediate member can flow therethrough to the base member side relative to the intermediate member, whereby convection of the gas can be generated in the internal space of the headlamp device, and release of heat from within the internal space is accelerated. As a result, the heat generated from the headlight light source and the position-light light source can be prevented from stagnating on the lens side, and fogging on the lens can be restrained from occurring. In addition, since the release of heat from within the internal space is promoted, such troubles as deformation of the members constituting the headlamp device can also be prevented from occurring.

According to the invention in claim 2, the intermediate member is so disposed as to form a predetermined gap between itself and the reflector. This ensures that the gas present in the internal space can flow into and through the gap between the internal member and the reflector, and the gas can flow more smoothly. Consequently, the release of heat from within the internal space can be more accelerated.

According to the invention, the intermediate member ensures that the gas taken in through the gas supply hole and moved to the lens side can be guided through the cutout to the gas exhaust hole. Therefore, the heat generated from the headlight light source and the position-light light source can be easily guided to the gas exhaust hole, so that the release of heat from within the internal space can be further promoted.

According to the invention, a cold gas can be taken in through the gas supply hole on the lower side of the base member to thereby cool the internal space. Further, the gas warmed up in the internal space can be exhausted through the gas exhaust hole on the upper side by convection. In other words, the convection of heat within the internal space can be utilized efficiently, and the release of heat from within the internal space can be accelerated further.

According to the invention in claim 3, the radiant heat generated from the headlight light source or the position-light light source is shieldingly prevented from being propagated directly toward other light source, whereby mutual thermal influences between the headlight light source and the position-light light source can be greatly reduced. Consequently, such troubles as deformation of the members constituting the headlamp device can also be prevented from occurring.

FIG. 1 is a schematic side view of a motorcycle having a headlamp device according to an embodiment of the present invention.
FIG. 2 is a front view of the headlamp device of FIG. 1.
FIG. 3 is a front view of the headlamp device of FIG. 2, with a lens removed.
FIG. 4 is a back elevation showing the rear side of the headlamp device of FIG. 2.
FIG. 5 is a front view of a base member of the headlamp device of FIG. 2.
FIG. 6 is a front view of an intermediate member of the headlamp device of FIG. 2.
FIG. 7 is a sectional view taken along line VII-VII of FIG. 2.
FIG. 8 is a partial perspective view of the headlamp device of FIG. 3, as viewed from the direction of arrow A.
FIG. 9 is a schematic illustration of paths of hot air in the headlamp device of FIG. 3.

Now, a headlamp device according to the present invention will be described in detail below by showing a preferred embodiment thereof and referring to the accompanying drawings.

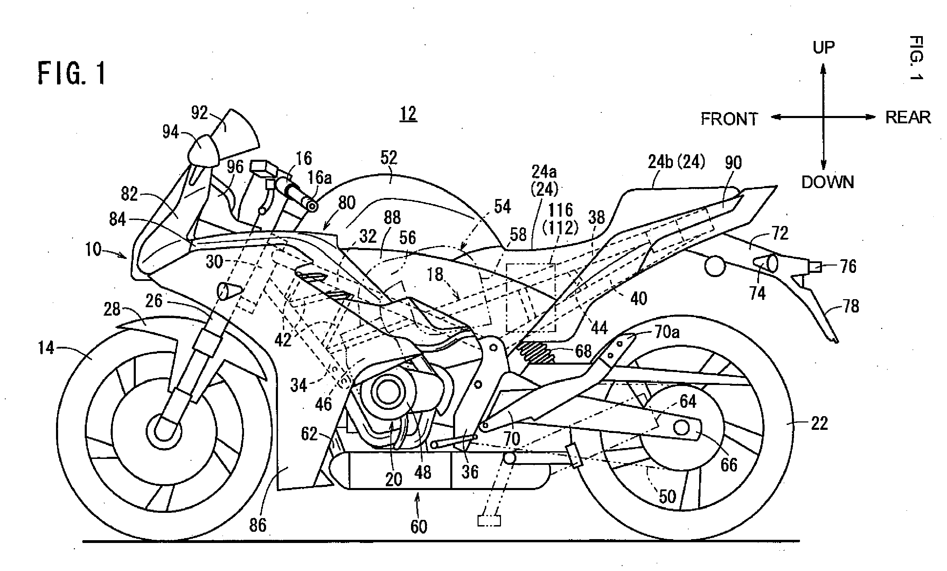

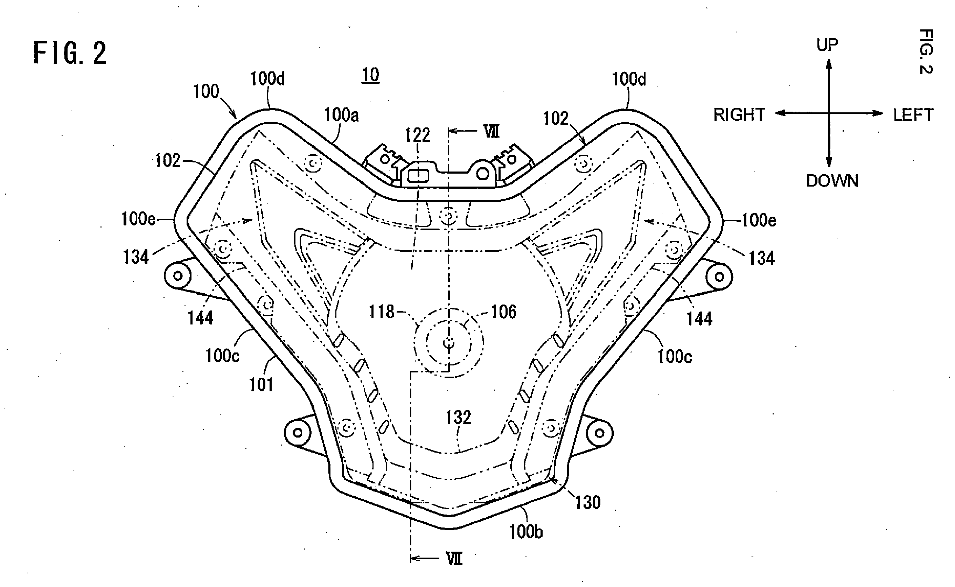

FIG. 1 is a schematic side view of a saddle type motorcycle (hereinafter referred also to simply as motorcycle) 12 having a headlamp device 10 according to an embodiment of the present invention. In the following, the present invention will be described in detail by showing the saddle type motorcycle as an example, but the invention is not to be restricted to the saddle type motorcycle, and, naturally, the invention is also applicable to other types of motorcycles or motorbikes, etc. Incidentally, for easy understanding of the invention, the forward and rearward directions (FRONT, REAR) and the upward and downward directions (UP, DOWN) will be described with reference to the directions of arrows in FIG. 1, and the leftward and rightward directions (LEFT, RIGHT) (see the directions of arrows in FIG. 2) will be described with reference to the directions as viewed from the driver seated on the vehicle body, unless otherwise designated.

As shown in FIG. 1, the motorcycle 12 includes a front wheel 14 as a steering wheel, a handlebar 16 for steering the front wheel 14, a body frame 18 constituting a vehicle body, an engine 20 as a drive source, a rear wheel 22 as a drive wheel, and a seat 24 on which to seat the rider(s).

The front wheel 14 is steerably borne on the lower end side of a front fork 26 having a pair of parts extending roughly vertically. A front fender 28 covering the upper side of the front wheel 14 is mounted to the front fork 26. In addition, the handlebar 16 is connected to the upper end side of the front fork 26, and a roughly middle portion of the front fork 26 is turnably borne on a head pipe 30 possessed by the body frame 18.

The handlebar 16 extends in the vehicle width direction in left-right symmetry, with its joint part to the front fork 26 as a center of symmetry. Grips 16a to be gripped by the driver are respectively mounted to both end portions of the handlebar 16.

The body frame 18 is composed, for example, of a tube frame of aluminum casting which is high in rigidity. The body frame 18 includes: a main frame 32 extending rearward from an upper portion of the head pipe 30 and being slowly inclined obliquely downward; a down frame 34 extending rearward from a lower portion of the head pipe 30 and being rapidly inclined obliquely downward; a pair of left and right pivot plates 36 connected to a rear end portion of the main frame 32 and extending downward from a roughly middle portion of the vehicle body; a seat frame 38 obliquely extending rearwardly upward from a roughly middle portion of the main frame 32; and a reinforcement frame 40 connected to the upper ends of the pivot plates 36 and extending obliquely upward toward a rear end portion of the seat frame 38. In addition, a plurality of front-side reinforcement stays 42 are connected between the main frame 32 and the down frame 34. Furthermore, a plurality of rear-side reinforcement stays 44 are connected between the seat frame 38 and the reinforcement frame 40.

The engine 20 includes a cylinder block 46 and a crankcase 48. The engine 20 may be, for example, of an in-line 4-cylinder type. The engine 20 has a configuration in which a front end portion of the crankcase 48 is supported by the down frame 34, and a rear end portion of the crankcase 48 is supported by upper end portions of the pivot plates 36, whereby the engine 20 is fixed in such an attitude that the cylinder axis in the cylinder block 46 is inclined forwardly upward.

A spark plug for combustion and a piston for compression are contained in the cylinder block 46. On the other hand, inside the crankcase 48, a crankshaft connected to the piston through a connecting rod and an engine output shaft are rotatably supported, and a clutch mechanism and a transmission and the like constituting a power transmission mechanism are contained between the shafts. A rotational driving force of the engine 20 is transmitted from the engine output shaft in the crankcase 48 to an endless drive chain 50, and is transmitted through the drive chain 50 to the rear wheel 22.

In addition, a radiator (not shown) for radiating heat from the engine 20 is disposed forwardly of the cylinder block 46. Further, a fuel tank 52 and an intake system 54 are mounted on the upper side of the engine 20. The intake system 54 has an intake port 56 connected to an upper portion of the cylinder block 46, and an air cleaner 58 provided at an upstream end of the intake port 56. The air cleaner 58 is disposed so as to be covered with the fuel tank 52, and adsorbs dust and the like present in air taken in through the double-structured cowl which will be described later. On the other hand, an exhaust system 60 is connected to a front portion of the cylinder block 46. The exhaust system 60 includes a plurality of exhaust pipes 62 extending downward from the cylinder block 46 in individual correspondence with the cylinders, and an exhaust muffler 64 disposed on the right side of the rear wheel 22 so as to be continuous with each of the exhaust pipes 62.

Besides, on the pivot plates 36 of the body frame 18, a swing arm 66 is borne at its front end portion so that it can be swung upward and downward. Further, a suspension 68 for absorbing vibrations is attached to a front portion side of the swing arm 66, and the rear wheel 22 is rotatably supported on rear end portions of the swing arm 66. Furthermore, pillion steps 70 extending rearward are fixed to the pivot plates 36, and step holders 70a on which to put the driver's and passenger's feet are attached thereto.

On the other hand, the seat 24 on which the riders (the driver and the passenger) are to be seated is disposed on the seat frame 38. As the seat 24, there is adopted a so-called tandem type seat having a front seat 24a on which the driver is to be seated and a rear seat 24b on which the passenger is to be seated rewarwardly of the front seat 24a.

A rear fender 72 roughly arcuate in shape in side view is mounted to a rear portion of the seat frame 38. Rear-side winker lamps 74 and a tail lamp 76 as lighting parts on the vehicle rear portion side are attached to the rear fender 72, and a license plate 78 is mounted under the tail lamp 76.

In addition, a body cover 80 constituting design surfaces (external appearance) of the vehicle body along the back-and-forth direction of the vehicle body is mounted on the motorcycle 12. The body cover 80 is formed, for example, from a polymer material such as acrylonitrile-butadiene-styrene (ABS), fiber-reinforced plastic (FRP) or polypropylene (PP).

The body cover 80 includes: a front cowl 82 constituting a design of a body front portion; a pair of left and right inner cowls 84 provided continuously with and on the rear side of both side surfaces of the front cowl 82 and extending rearward from both lateral sides; a pair of left and right outer cowls 86 partly covering the inner cowls 84 on the outer sides of the inner cowls 84; a pair of left and right middle cowls 88 provided continuously with and on the rear side of the inner cowls 84 and extending to the lower side of the front seat 24a; and a rear cowl 90 provided continuously with and on the rear side of the middle cowls 88 and extending rearward along the seat frame 38.

The front cowl 82 is formed in such a shape as to cover a roughly middle portion of the front fork 26 and the head pipe 30 on the front side of them. At the front surface of the front cowl 82, the headlamp device 10 is disposed which illuminates the front side of the vehicle during traveling. In addition, a front screen 92 formed in such a shape as to relieve resistance of an airflow induced by traveling of the vehicle is attached to the front cowl 82, and a pair of left and right rearview mirrors 94 are mounted on both sides in the vehicle width direction of the front screen 92. Further, on the rear side of the front cowl 82, a meter unit 96 is disposed in which meters such as a speedometer and a tachometer are contained.

The inner cowl 84 and the outer cowl 86 are mounted to both side surfaces of the front of the motorcycle 12 as a double-structured cowl. Since the double-structured cowl composed of the inner cowl 84 and the outer cowl 86 is thus provided, air can be taken in via a gap formed between the two cowls, and the air can be easily guided to the air cleaner 58.

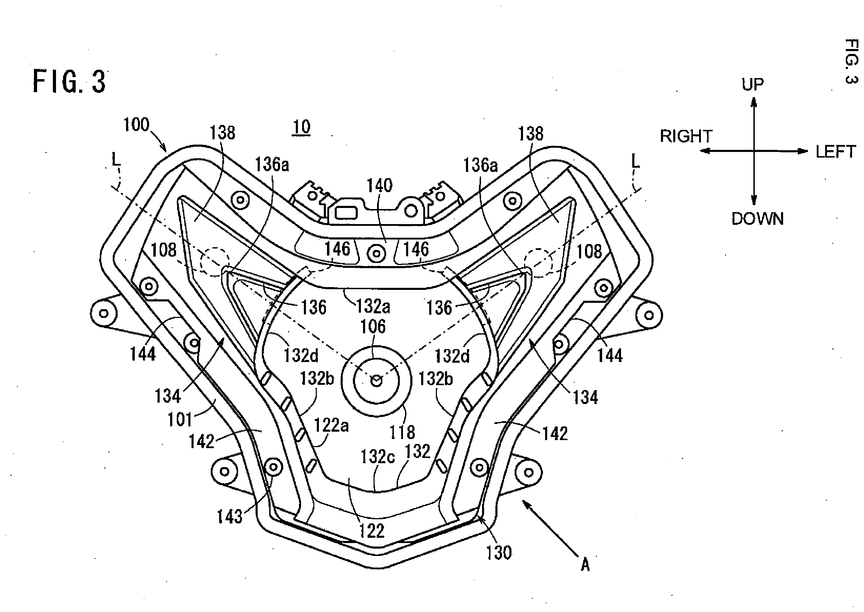

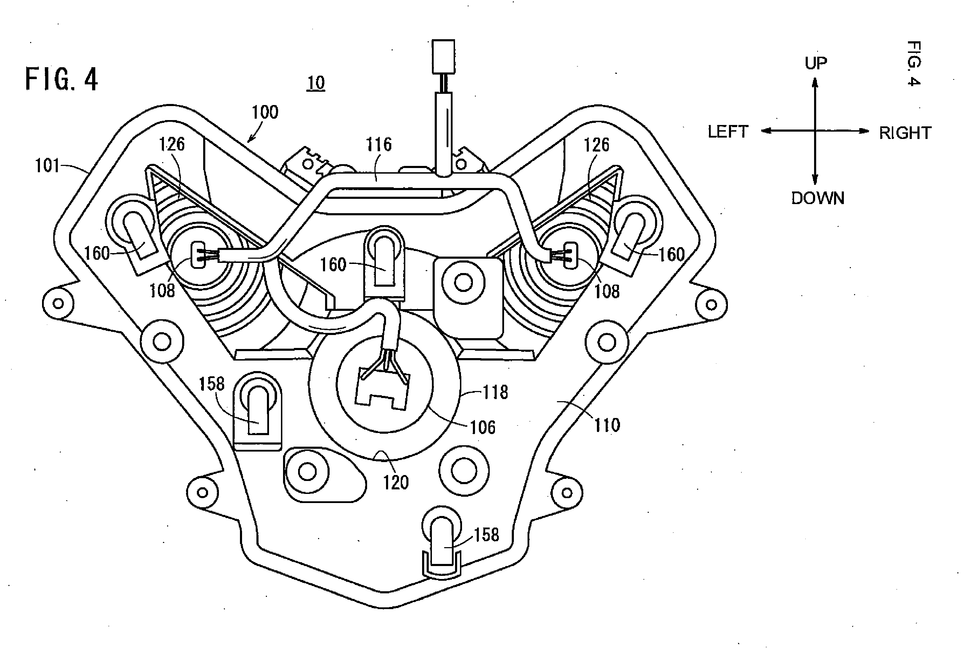

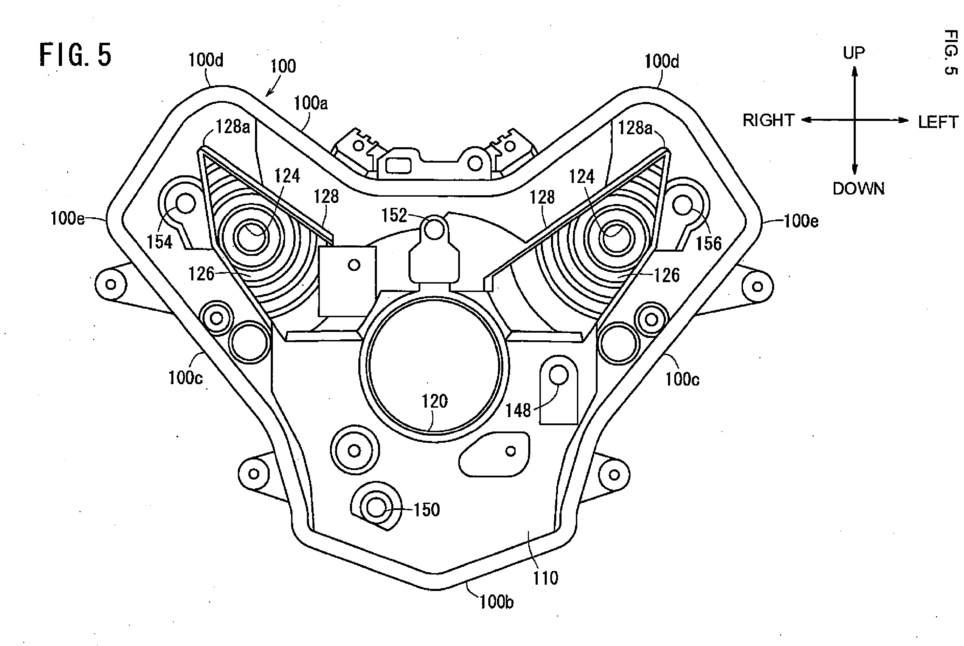

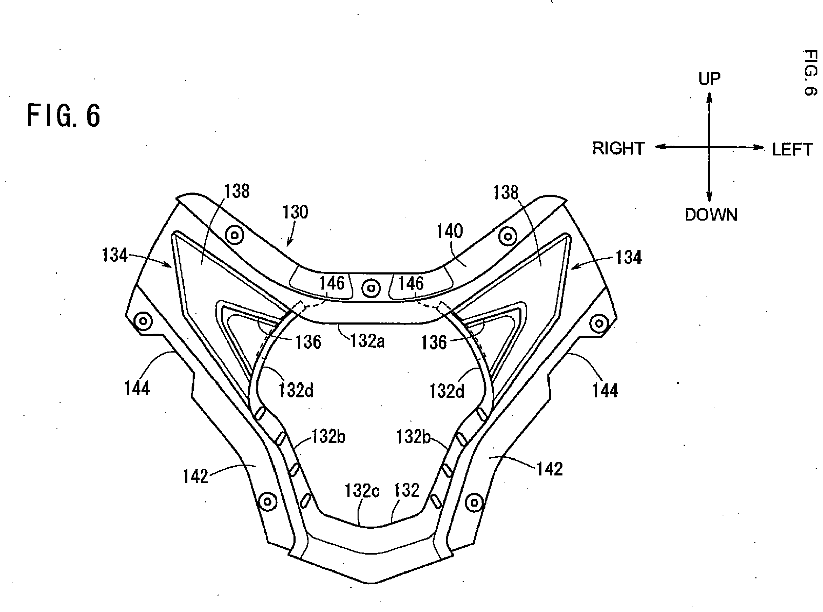

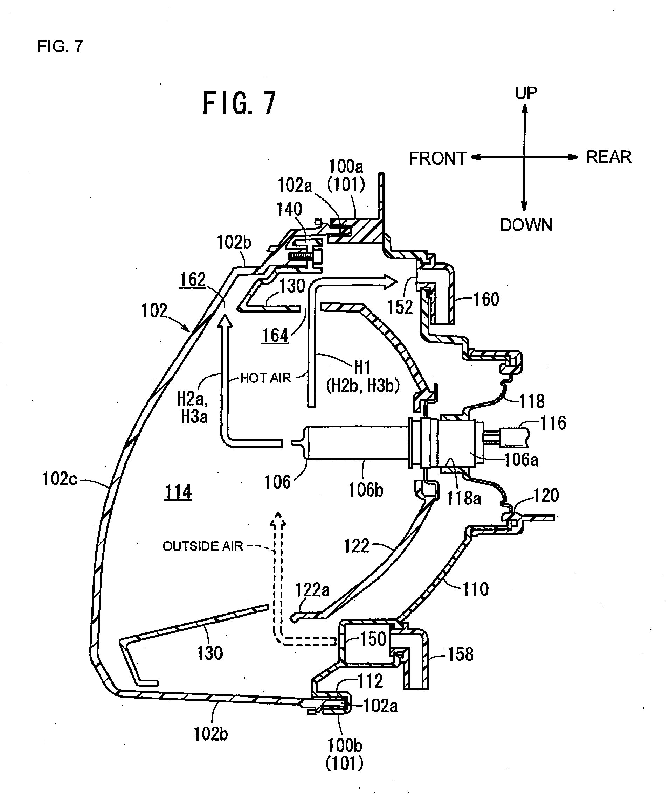

Now, the configuration of the headlamp device 10 according to the present invention will be described below referring to FIGS. 2 to 7. FIG. 2 is a front view of the headlamp device 10 of FIG. 1; FIG. 3 is a front view of the headlamp device 10 of FIG. 2, with a lens 102 removed; FIG. 4 is a back elevation showing the rear side of the headlamp device 10 of FIG. 2; FIG. 5 is a front view of a base member 100 of the headlamp device 10 of FIG. 2; FIG. 6 is a front view of an intermediate member 130 of FIG. 3; and FIG. 7 is a sectional view taken along line VII-VII.

As shown in FIGS. 2 and 3, the headlamp device 10 according to the present embodiment includes, in one unit, a headlight bulb (headlight light source) 106 for illuminating as a headlamp (headlight) and two position light bulbs (position-light light sources) 108, 108 for lighting as position lights. In addition, the headlamp device 10 has a casing which includes the base member 100 supporting the headlight bulb 106 and the position light bulbs 108, 108, and the lens 102 mounted to a front portion of the base member 100.

As shown in FIGS. 2 to 5, the base member 100 is formed in a roughly heart-like shape in front view. More specifically, an upper edge part 100a of the base member 100 is formed to be hollowed in a central portion thereof, and both left and right edges continuous with the central portion are inclined obliquely upward. Besides, a lower edge part 100b is smaller in width than the upper edge part 100a, and is slowly inclined obliquely upward along vehicle-width-directionally outward directions. On the other hand, a pair of left and right side edge parts 100c, 100c are inclined obliquely downward along vehicle-width-directionally outward directions from top portions 100d, 100d continuous with the upper edge part 100a, are bent at predetermined positions (side end portions 100e, 100e) and are inclined obliquely downward toward the center, to be continuous with the lower edge part 100b.

In addition, as shown in FIG. 7, the base member 100 is formed in a roughly concave box-like shape in side sectional view. A bottom portion of the concave shape of the base member 100 is formed in an arcuate shape as a rear side wall part 110. The rear side wall part 110 is provided at its peripheral edge with the upper edge part 100a, the lower edge part 100b and the side edge parts 100c, 100c (hereinafter, these parts will collectively be referred to also as peripheral edge part 101). The peripheral edge part 101 of the base member 100 is provided at the front thereof with a mounting groove 112 into which a rear-side opening end part 102a of the lens 102 is to be inserted.

The base member 100 is molded from a synthetic resin material endurable to a temperature rise attendant on light emission from the headlight bulb 106 and the position light bulbs 108. As the synthetic resin material, for example, a BMC (Bulk Molding Compound) resin or the like is preferably adopted.

On the other hand, the lens 102 is molded from a highly transparent synthetic resin material, in such an outer shape as to be roughly coincident with the shape of the peripheral edge part 101 of the base member 100 in front view, as shown in FIG. 2. The lens 102 is mounted at its rear-side opening end part 102a to the mounting groove 112 of the base member 100, without any gap therebetween. This ensures that rainwater or the like would not enter into an internal space 114 (see FIG. 7) formed by the mounting of the base member 100 and the lens 102 to each other.

In addition, the lens 102 has a configuration in which, in side sectional view as shown in FIG. 7, a side peripheral surface 102b projects forward from the rear-side opening end part 102a, and a front surface part 102c is formed in a roughly arcuate shape slowly bulging increasingly from the upper side toward the lower side. The shape of the front surface part 102c of the lens 102 is so set as to be continuous with the design surface of the front cowl 82 (see FIG. 1). Specifically, the lens 102 of the headlamp device 10 and the front cowl 82, at the front of the vehicle body, constitute a streamline-shaped design which is slowly inclined in vehicle-width-directionally outward and upward from a tip central portion toward the rear side.

As shown in FIGS. 2 and 3, the headlight bulb 106 is mounted in a center position of the base member 100 formed in the roughly heart-like shape. As the headlight bulb 106, for example, a halogen lamp or an HID lamp or the like can be applied. In addition, the headlamp device 10 may have an LED lamp or the like, instead of the headlight bulb 106, as the headlight light source.

As shown in FIG. 7, the headlight bulb 106 according to the present embodiment has a base portion 106a to which anode and cathode wirings 116 are connected, and a light emitting portion 106c projecting from the base portion 106a toward the lens 102. The base portion 106a is supported by a support member 118 attached to the rear side wall part 110 of the base member 100. The support member 118 is mounted in a mounting hole 120 (see FIG. 5) formed in a roughly central portion of the rear side wall part 110. Of the support member 118, a central portion projects toward the lens 102 and is provided at its tip portion with a fixing hole 118a in which the base portion 106a of the headlight bulb 106 is fixed and supported. The headlight bulb 106 as a whole is supported roughly horizontally, with its base portion 106a fitted in the fixing hole 118a. Besides, the light emitting portion 106b of the headlight bulb 106 is provided therein with a filament, and emits light in a predetermined quantity when supplied with electric power through the wiring 116, based on the driver's light turning-on operation.

To a predetermined position of the base portion 106a, a reflector 122 is attached by which the light emitted from the headlight bulb 106 is reflected. The reflector 122 is formed in a curved surface (for example, quadric surface) such that the light emitted from the headlight bulb 106 to the side periphery is reflected thereby toward the forward side.

On the other hand, as shown in FIG. 3, the two position light bulbs 108, 108 are respectively mounted at vehicle-width-directionally outer upper positions on the base member 100. These position light bulbs 108, 108 are turned on for enhancing the assuredness with which the motorcycle 12 can be visually recognized by the oncoming vehicles. Therefore, light bulbs lower in light emission capacity than the headlight bulb 106 are applied as the position light bulbs 108, 108.

As shown in FIG. 5, the base member 100 is provided with two mounting holes 124, 124 at vehicle-width-directionally outer upper positions thereof, and the position light bulbs 108, 108 are mounted in the mounting holes 124, 124 respectively. Besides, in the peripheries of the mounting holes 124, 124, stepped parts 126, 126 are provided by which the light emitted from the position light bulbs 108, 108 is reflected into a predetermined direction. In other words, the stepped parts 126, 126 function as reflectors for the position light bulbs 108.

Further, wall parts 128, 128 are erectly provided in the peripheries of the mounting holes 124, 124 of the base member 100. The wall parts 128, 128 are formed in a roughly V shape in front view, and extend toward the center (toward the mounting hole 120) from bent portions (top portions) 128a, 128a located at vehicle-width-directionally outer upper positions, while surrounding the mounting holes 124, 124 by two edge portions thereof. Each of the wall parts 128, 128 is open only toward the mounting hole 120, and a part of the reflector 122 extends toward the open part.

The wall parts 128, 128 cooperate with the outer surface of the reflector 122 in surrounding the position light bulbs 108, 108, to thereby form spaces shielded from the headlight bulb 106. Specifically, the position light bulbs 108, 108 are disposed in comparatively narrow spaces shielded by the reflector 122 and the wall parts 128, 128, whereby the quantities of light and illumination directions in emission of light from the position light bulbs 108, 108 are set appropriately.

In addition, in the headlamp device 10 according to the present embodiment, as shown in FIG. 3, an intermediate member 130 is disposed on the front side of the position light bulbs 108, 108. Front surfaces of the position light bulbs 108, 108 are covered by cover members 138, 138 which are mounted to the intermediate member 130.

The intermediate member 130 is molded from an opaque synthetic resin material pigmented in a predetermined color, and is disposed between the lens 102 and the reflector 122 in the internal space 114 of the headlamp device 10. Specifically, the intermediate member 130 is disposed at the rear of the transparent lens 102, and is visually recognized through the lens 102 when the headlamp device 10 is viewed from the front side. Therefore, the intermediate member 130 has a shape so designed as to engage with the lens 102 and thereby to enhance external appearance (aesthetic appearance) of the headlamp device 10.

More specifically, as shown in FIGS. 2, 3 and 6, the intermediate member 130 is a little smaller than the peripheral edge part 101 of the base member 100 and the side peripheral surface 102b of the lens 102 and has an outer shape roughly coincident with the peripheral edge part 101, in front view. Accordingly, in the state where the intermediate member 130 is disposed in the internal space 114, the intermediate member 130 serves as a design surface hiding the rear side wall part 110 of the base member 100, as shown in FIG. 2.

Besides, as shown in FIGS. 3 and 6, the intermediate member 130 is provided in a front central portion thereof with a headlight aperture 132 for guiding the illumination of headlamp by the headlight bulb 106. The headlight aperture 132 is defined by an upper end edge part 132a and lower-side side end edge parts 132b, 132b which are slowly curved to be protuberant inward, and a lower end edge part 132c and upper-side side end edge parts 132d, 132d which are slowly curved to be protuberant outward. In the state where the intermediate member 130 is disposed in the internal space 114, the headlight bulb 106 is disposed in a central position of the headlight aperture 132. Therefore, when the headlamp device 10 is viewed from the front side, the distance from the upper end edge part 132a to the headlight bulb 106 and the distances from the lower-side side end edge parts 132b, 132b to the headlight bulb 106 appear to be equal, while the distance from the lower end edge part 132c to the headlight bulb 106 and the distances from the upper-side side end edge parts 132d, 132d to the headlight bulb 106 appear to be equal. This emphasizes symmetry, so that external appearance of the headlamp device 10 is enhanced.

In addition, at vehicle-width-directionally outer upper positions of the intermediate member 130, a pair of left and right shield parts 134, 134 are formed which cover the position light bulbs 108, 108. The shield parts 134, 134 each include a roughly triangular resin part 136, 136 inclined toward a vehicle-width-directionally outer upper side from the upper-side side end edge part 132d, 132d of the headlight aperture 132, and a cover member 138, 138 so fitted as to surround the two edges of the resin part 136, 136 and extending further toward an obliquely upper side. In this case, the resin parts 136, 136 are formed integrally with the intermediate member 130, whereas the cover members 138, 138 are formed from a semi-transparent synthetic resin material as separate members. In the condition where the intermediate member 130 is disposed in the internal space 114, as shown in FIG. 3, the light emitted from the position light bulbs 108, 108 is transmitted through the semi-transparent cover members 138, 138 which are disposed on the rear side of the opaque resin parts 136, 136 and surround the resin parts 136, 136. In other words, the shield parts 134, 134 function to permit a predetermined quantity of light from the position light bulbs 108, 108 to be transmitted therethrough to the exterior of the headlamp device 10, while covering the position light bulbs 108, 108.

The intermediate member 130 is screwed to the rear-side opening end part 102a of the lens 102, and is held by the lens 102 (see FIG. 7). Therefore, the intermediate member 130 is provided with an upper edge mounting part 140 and a pair of left and right side edge mounting parts 142, 142 which extend outward from the peripheries of the headlight aperture 132 and the shield parts 134. The upper edge mounting part 140 and the side edge mounting parts 142, 142 are each provided with a plurality of screw holes 143.

Here, the intermediate member 130 is provided with a pair of left and right cutouts 144, 144 on the upper side of the side edge mounting parts 142, 142. The cutouts 144, 144 have predetermined depth and width in relation to the peripheral edges of the side edge mounting parts 142, 142. In the condition where the intermediate member 130 is disposed in the internal space 114, the cutouts 144, 144 ensure that air in convection to the lens 102 side relative to the intermediate member 130 can flow to the base member 100 side.

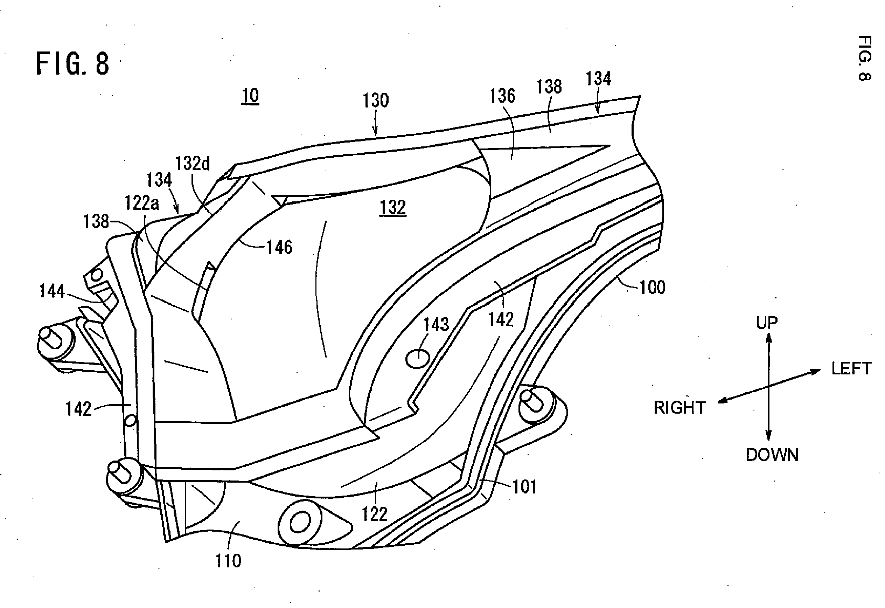

FIG. 8 is a partial perspective view of the headlamp device 10 of FIG. 3, as viewed from the direction of arrow A. As shown in FIGS. 6 and 8, the intermediate member 130 is formed with partition walls 146, 146 on the rear side of the upper-side side end edge parts 132d, 132d of the headlight aperture 132. In the condition where the intermediate member 130 is disposed in the space, the partition walls 146, 146 are proximate to a peripheral end part 122a of the reflector 122 disposed on the rear side of the intermediate member 130. In addition, the partition walls 146, 146 are formed on imaginary straight lines L each of which interconnects the headlight bulb 106 and the position light bulb 108 (see FIG. 3). This ensures that the partition wall 146 is interposed between the headlight bulb 106 and each of the position light bulbs 108, 108. As a result, the partition walls 146, 146 can prevent the radiant heat generated from the headlight bulb 106 (or the position light bulbs 108, 108) at the time of light emission from being propagated directly toward the cover members 138, 138.

Besides, the headlamp device 10 is provided with a distribution mechanism for distributing air into the internal space 114 defined by the base member 100 and the lens 102, for releasing the heat generated by emission of light from the headlight bulb 106 and the position light bulbs 108, 108. More specifically, as shown in FIG. 5, the rear side wall part 110 of the base member 100 is provided with a plurality of gas supply holes (first and second gas supply holes 148, 150) for taking air into the internal space 114, and a plurality of gas exhaust holes (first to third gas exhaust holes 152, 154, 156) for exhausting air from the internal space 114.

The first gas supply hole 148 is provided on a lateral side of the mounting hole 120, whereas the second gas supply hole 150 is provided on the lower side of the base member 100. The first and second gas supply holes 148, 150 are connected respectively with gas supply pipes 158 (see FIGS. 4 and 7) provided on the back side of the base member 100, and the gas supply pipes 158 are each connected to a breather (not shown). The outside air (for example, cooling air such as an airflow induced by the traveling of the vehicle) is sent from the breather, and it can be taken into the internal space 114 of the headlamp device 10 through the first and second gas supply holes 148, 150.

On the other hand, the first gas exhaust hole 152 is provided on the upper side of the mounting hole 120, while the second and third gas exhaust holes 154, 156 are provided in the vicinity of the mounting holes 124 of the position light bulbs 108 at positions partitioned by the wall parts 128, 128. The first to third gas exhaust holes 152, 154, 156 are connected respectively with gas exhaust pipes 160 (see FIGS. 4 and 7) provided on the back side of the base member 100 so that air in convection in the internal space 114 of the headlamp device 10 is exhausted to the outside of the headlamp device 10.

As shown in FIG. 7, the headlamp device 10 in the present embodiment has a configuration in which in the condition where the members are assembled together, the lens 102, the intermediate member 130, the reflector 122 (and the headlight bulb 106) and the base member 100 are disposed in this order from the front side toward the rear side. When the headlamp device 10 is viewed from the front side, as shown in FIG. 3, the peripheral end part 122a of the reflector 122 is roughly coincident with the upper end edge part 132a, the lower-side side end edge parts 132b, 132b, the lower end edge part 132c and the upper-side side end edge parts 132d, 132d which form the headlight aperture 132. In other words, the intermediate member 130 in the present embodiment hides the peripheral end part 122a of the reflector 122, whereby the external appearance of the headlamp device 10 is enhanced.

Further, in the headlamp device 10, the upper edge mounting part 140 and the side edge mounting parts 142 of the intermediate member 130 are screwed to the rear surface side of the lens 102 through the screw holes 143. In other words, in the assembled state of the headlamp device 10, the intermediate member 130 is held in the internal space 114 by the lens 102. This ensures that a first gap 162 having a predetermined spacing is formed between the rear surface of the lens 102 and the front surface of the intermediate member 130.

Furthermore, in the assembled state of the headlamp device 10, as shown in FIG. 7, a second gap 164 is formed between the intermediate member 130 and the reflector 122. In other words, the intermediate member 130 is spaced from the reflector 122 by a predetermined spacing. In this case, the partition walls 146, 146 formed at the upper-side side end edge parts 132d, 132d are disposed at positions proximate to the peripheral end part 122a of the reflector 122.

The motorcycle 12 having the headlamp device 10 according to the present embodiment is basically configured as above-described. Now, operation and effect of the headlamp device 10 will be described below.

The motorcycle 12 causes the headlight bulb 106 to emit light when a headlight turning-on operation is conducted by the driver. In this case, the light emitted forward from the headlight bulb 106 is transmitted through the lens 102, to be radiated directly to the forward side of the headlamp device 10. In addition, the light emitted from the headlight bulb 106 to the surroundings is reflected by the reflector 122, to be transmitted through the lens 102 and radiated toward the forward side of the headlamp device 10. As a result, the headlamp device 10 can perform an illuminating operation to emit a predetermined quantity of light.

On the other hand, the motorcycle 12 causes the two position light bulbs 108, 108 possessed by the headlamp device 10 to emit light when a position light turning-on operation is conducted. The light emitted from the position light bulbs 108, 108 is controlled to a predetermined light quantity and a predetermined illumination direction by the shielded spaces (the reflector 122, the wall parts 128, 128) relevant to the position light bulbs 108, 108 and the shield parts 134, 134 of the intermediate member 130, to be radiated through the cover members 138, 138 covering the front surface.

Here, in the headlamp device 10, emission of light from the headlight bulb 106 and the position light bulbs 108, 108 is attended by generation of heat from each of the light bulbs. As a result, the heat is transmitted to air present in the internal space 114, whereby the temperature of the headlamp device 10 as a whole is raised. The headlamp device 10 according to the present embodiment is so configured that the heat generated from the headlight bulb 106 and the position light bulbs 108, 108 is discharged by utilizing convection inside the internal space 114.

Specifically, the outside air (for example, the airflow induced by the traveling of the vehicle) is supplied (let flow) into the headlamp device 10 through the first and second gas supply holes 148, 150 provided in the base member 100, and heated air (hereinafter referred to also as hot air) inside the headlamp device 10 is exhausted (let flow out) through the first to third gas exhaust holes.

More specifically, the outside air supplied through the first gas supply hole 148 is used mainly for cooling the headlight bulb 106 and the reflector 122. In this case, the outside air supplied through the first gas supply hole 148 flows on the back side of the reflector 122, thereby cooling (radiating) the headlight bulb 106 and the reflector 122, before being exhausted through the first to third gas exhaust holes 152, 154, 156 as hot air.

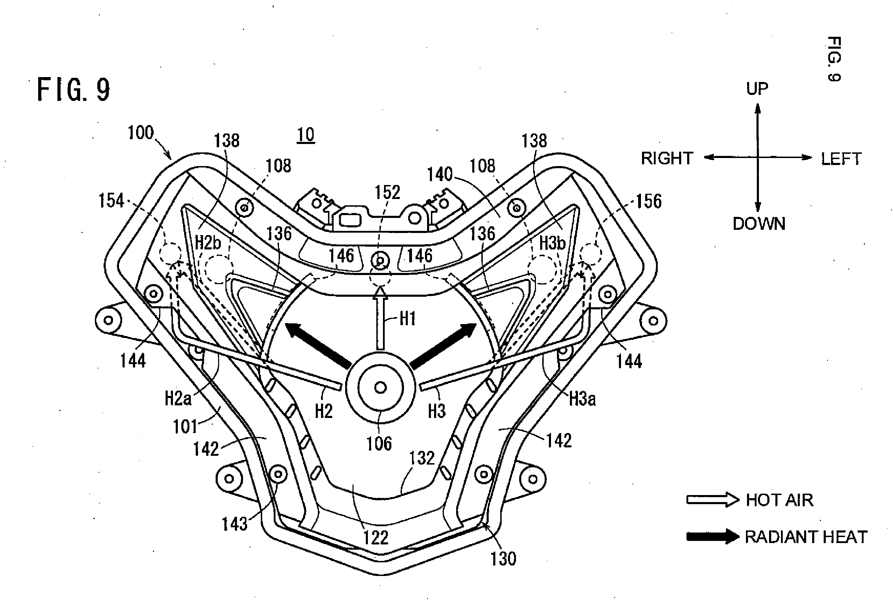

In addition, the outside air supplied through the second gas supply hole 150 flows through the gap between the intermediate member 130 and the reflector 122 into an aperture space of the reflector 122 (or to the front side of the reflector 122), thereby radiating the headlight bulb 106 and the surrounding space thereof. Attendant on this radiation (heat release), the outside air is warmed up to be hot air, which is guided upward by a convection phenomenon in the internal space 114 of the headlamp device 10. While moving upward in the headlamp device 10, the hot air is diffused also in the vehicle width directions, so that the moving path of the hot air is roughly divided into three directions (a first path H1, a second path H2, and a third path H3) (see FIG. 9).

FIG. 9 is a schematic illustration of the paths of the hot air in the headlamp device 10 of FIG. 3. The first path H1 is a path along which the hot air warmed up by the headlight bulb 106 moves upward. In this case, the hot air in the vicinity of the headlight bulb 106 moves upward by convection, flows through the second gap 164 (see FIG. 7) between the intermediate member 130 and the reflector 122 to the first gas exhaust hole 152, and is exhausted through the first gas exhaust hole 152 to the exterior of the headlamp device 10.

On the other hand, the second path H2 and the third path H3 are paths along which the hot air warmed up by the headlight bulb 106 moves obliquely toward the vehicle-width-directionally outer upper sides. The second path H2 and the third path H3 are each divided further into two paths. Specifically, the second path H2 and the third path H3 are divided, by the intermediate member 130 disposed in the internal space 114, into a front-side second path H2a and a front-side third path H3a passing on the front side of the intermediate member 130 and a rear-side second path H2b and a rear-side third path H3b passing on the rear side of the intermediate member 130.

When the hot air passes along the rear-side second path H2b and the rear-side third path H3b, like when the hot air passes along the first path H1, the hot air flows through the second gap 164 formed between the intermediate member 130 and the reflector 122 to the second and third gas exhaust holes 154, 156, and is exhausted through the second and third gas exhaust holes 154, 156 to the exterior.

On the other hand, in the case where the hot air passes along the front-side second path H2a and the front-side third path H3a, the hot air flows through the first gap 162 formed between the lens 102 and the intermediate member 130, thereby moving obliquely toward the vehicle-width-directionally outer upper sides. Here, the headlamp device 10 according to the present embodiment has the pair of left and right cutouts 144, 144 in the side edge mounting parts 142, 142 of the intermediate member 130. Therefore, even if the hot air passes on the front side of the intermediate member 130 (through the first gap 162; see FIG. 7) obliquely toward the vehicle-width-directionally outer upper sides, this hot air can be easily guided to the back side of the intermediate member 130 through the cutouts 144, 144.

In other words, since the headlamp device 10 according to the present embodiment is provided with the cutouts 144, 144, the hot air having moved to the lens 102 side can be guided onto the front-side second path H2a and the front-side third path H3a, whereby stagnation of the hot air in the vicinity of the lens 102 can be avoided.

In addition, the hot air generated due to emission of light from the position light bulbs 108, 108 passes over the wall parts 128, 128 formed on the base member 100 and passes on the back side of the intermediate member 130, to be guided to the second and third gas exhaust holes 154, 156. Specifically, since the intermediate member 130 and the base member 100 are spaced from each other, the hot air generated from the position light bulb 108 can flow partly along the rear-side second path H2b and the rear-side third path H3b, so that the hot air is easily exhausted through the second and third gas exhaust holes 154, 156 in the vicinity of the position light bulbs 108, 108.

Thus, in the headlamp device 10, predetermined convections can be generated in the internal space 114, whereby release of heat from the internal space 114 warmed up by the heat generated from the headlight bulb 106 and the position light bulbs 108, 108 can be accelerated. Therefore, the hot air in the internal space 114 can be prevented from stagnating on the lens 102 side, whereby fogging of the lens 102 of the headlamp device 10 can be obviated.

Besides, the headlamp device 10 is so configured that in the vicinity of the upper-side side end edge parts 132d, 132d of the intermediate member 130 where the heat of the headlight bulb 106 and the heat of the position light bulbs 108 are concentrated, the hot air moving obliquely toward the vehicle-width-directionally outer upper sides can be divided into flows on the front side and the rear side of the intermediate member 130 and be guided to the second and third gas exhaust holes 154, 156, so that release of heat from these parts can be accelerated. Consequently, the members (the intermediate member 130, the cover member 138, etc.) constituting the headlamp device 10 can be prevented from deformation or the like.

Further, in the headlamp device 10, cold air can be taken in through the second gas supply hole 150 on the lower side of the base member 100 to cool the internal space 114, and the gas warmed up in the internal space can be exhausted through the first to third gas exhaust holes 152, 154, 156 on the upper side by convection. Thus, the convections in the internal space 114 can be utilized efficiently, whereby release of heat from the internal space 114 is further accelerated.

Meanwhile, as shown in FIG. 9, the headlight bulb 106 (or the position light bulbs 108, 108) generates radiant heat (heat rays) when emitting light. In this case, if for example the radiant heat generated from the headlight bulb 106 and the position light bulbs 108, 108 is propagated straight toward the cover members 138, 138 and large quantities of radiant heat reach the cover members 138, 138, such troubles as deformation of the cover members 138, 138 may be generated.

On the other hand, in the headlamp device 10 according to the present embodiment, the partition walls 146, 146 are interposed between the headlight bulb 106 and the position light bulbs 108, 108 (on the imaginary straight lines L in FIG. 3). The partition walls 146, 146 can inhibit the radiant heat generated from the headlight bulb 106 from being propagated directly toward the position light bulbs 108, 108. In other words, the partition walls 146, 146 possessed by the intermediate member 130 can greatly reduce mutual influence of the radiant heat from the headlight bulb 106 or the position light bulbs 108, 108 on the other light bulb(s). As a result, such troubles as deformation of the members (for example, the cover members 138, 138) constituting the headlamp device 10 can be prevented.

Incidentally, the present invention is not to be restricted to the above-described embodiment, and, naturally, various configurations can be adopted without departure from the scope of the claims.

**[Description of Reference Symbols]**

| | | | |
|---|---|---|---|
| 10 | Headlamp device | 12 | Motorcycle |
| 14 | Front wheel | 16 | Handlebar |
| 18 | Body frame | 20 | Engine |
| 22 | Rear wheel | 100 | Base member |
| 102 | Lens | 106 | Headlight bulb |
| 108 | Position light bulb | 114 | Internal space |
| 122 | Reflector | 128 | Wall part |
| 130 | Intermediate member | 132 | Headlight aperture |
| 134 | Shield part | 146 | Partition wall |
| 162 | First gap | 164 | Second gap |

## Claims

1. A headlamp device (10) comprising: a base member (100) on which to dispose a headlight light source (106) and a position-light light source (108); a lens (102) mounted to a front portion of said base member (100); a reflector (122) which is disposed in an internal space (114) defined by said base member (100) and said lens (102) and which reflects light emitted by said headlight light source (106); and an intermediate member (130) which covers said base member (100) at least in the surroundings of said reflector (122) in front view,
wherein said intermediate member (130) is provided with a cutout (144) which permits a gas present on said lens (102) side relative to said intermediate member (130) to flow therethrough to said base member (100) side relative to said intermediate member (130),
**characterized in that**
an upper edge part (100a) of the base member (100) is formed to be hollowed in a central portion thereof, and both left and right edges continuous with the central portion are inclined obliquely upward,
a lower edge part (100b) of the base member (100) is smaller in width than the upper edge part (100a), and is slowly inclined obliquely upward along vehicle-width-directionally outward directions, and
a pair of left and right side edge parts (100c, 100c) are inclined obliquely downward along vehicle-width-directionally outward directions from top portions (100d, 100d) continuous with the upper edge part (100a), are bent at side end portions (100e, 100e) and are inclined obliquely downward toward the center, to be continuous with the lower edge part (100b);
wherein said base member (100) has a gas supply hole (148, 150) for taking a gas into said internal space (114) and a gas exhaust hole (152, 154, 156) for exhausting the gas from inside said internal space (114),
wherein said intermediate member (130) ensures that the gas taken in through said gas supply hole (148, 150) and moved to said lens (102) side can be guided through said cutout (144) to said gas exhaust hole (152, 154, 156),
wherein two cutouts (144) are provided on the upper side of said headlight light source (106) and are provided on the outer side of the intermediate member (130) in the vehicle width direction, so as to be close to the pair of left and right side edge parts (100c, 100c),
wherein said gas supply hole (150) is provided on the lower side of said base member (100), and
wherein said gas exhaust hole (152, 154, 156) is provided on the upper side of said base member (100).

2. The headlamp device (10) according to claim 1,
wherein said intermediate member (130) is disposed in said internal space (114) so as to form a gap (164) between itself and said reflector (122).

3. The headlamp device (10) according to any one of claims 1 or 2,
wherein said intermediate member (130) has a partition wall (146) on an imaginary straight line interconnecting said headlight light source (106) and said position-light light source (108), and
said partition wall (146) shieldingly prevents radiant heat generated from said headlight light source (106) or said position-light light source (108) from being propagated directly toward other light source.

4. The headlamp device (10) according to any one of claims 1 to 3,
wherein the headlamp device (10) possesses two position-light light sources (108, 108),
wherein the base member (100) is formed in a roughly concave box-like shape in side sectional view and a bottom portion of the concave shape of the base member (100) is formed in an arcuate shape as a rear side wall part (110),
wherein the rear side wall part (110) is provided at its peripheral edge with the upper edge part (100a), the lower edge part (100b) and the side edge parts (100c, 100c), and the rear side wall part (110) is further provided with a plurality of gas exhaust holes (152, 154, 156) for exhausting air from the internal space (114),
wherein a first gas exhaust hole (152) is provided on the upper side of a mounting hole (120), which is formed in a roughly central portion of the rear side wall part (110), and
wherein a second gas exhaust hole (154) and a third gas exhaust hole (156) are provided in the vicinity of mounting holes (124) of the two position-light light sources (108, 108), which are provided at vehicle-width-directionally outer upper positions of the base member (100) .

## Patentansprüche

1. Scheinwerfervorrichtung (10), die aufweist: ein Basiselement (100), an dem eine Scheinwerferlichtquelle (106) und eine Positionslichtlichtquelle (108) anzuordnen ist; eine Linse (102), die an einem vorderen Bereich des Basiselements (100) befestigt ist; einen Reflektor (122), der in einem Innenraum (114) angeordnet ist, der von dem Basiselement (100) und der Linse (102) definiert wird, und der Licht reflektiert, das von der Scheinwerferlichtquelle (106) ausgestrahlt wird; und ein Zwischenelement (130), das das Basiselement (100) von vorne betrachtet wenigstens um den Reflektor (122) herum abdeckt,
wobei das Zwischenelement (130) mit einem Ausschnitt (144) vorgesehen ist, der das Hindurchfließen eines an der Seite der Linse (102) bezüglich des Zwischenelements (130) vorhandenes Gases zur Seite des Basiselements (100) bezüglich des Zwischenelements (130) ermöglicht,
**dadurch gekennzeichnet, dass**
ein oberer Kantenteil (100a) des Basiselements (100) in einem Mittenbereich davon als hohl ausgebildet ist,
und die linke und rechte Kante beide fortlaufend mit dem Mittenbereich schräg nach oben geneigt sind,
ein unterer Kantenteil (100b) des Basiselements (100) in der Breite kleiner ist als der obere Kantenteil (100a) und leicht schräg nach oben entlang der Fahrzeugbreite nach außen verlaufend geneigt ist, und
ein Paar aus linkem und rechtem Seitenkantenteil (100c, 100c) schräg nach unten entlang der Fahrzeugbreite nach außen verlaufend von den oberen Bereichen (100d, 100d) fortlaufend mit dem oberen Kantenteil (100a) geneigt ist, an den seitlichen Endbereichen (100e, 100e) gebogen ist und schräg nach unten zur Mitte hin geneigt sind, um mit dem unteren Kantenteil (100b) fortlaufend zu sein;
wobei das Basiselement (100) eine Gaszuleitungsöffnung (148, 150) aufweist, um ein Gas in dem Innenraum (114) aufzunehmen, und eine Gasaustrittsöffnung (152, 154, 156), um das Gas aus dem Inneren des Innenraums (114) abzuleiten,
wobei das Zwischenelement (130) sicherstellt, dass das durch die Gaszuleitungsöffnung (148, 150) eingeführte und zur Seite der Linse (102) geführte Gas durch den Ausschnitt (144) zu der Gasaustrittsöffnung (152, 154, 156) geführt werden kann,
wobei zwei Ausschnitte (144) an der oberen Seite der Scheinwerferlichtquelle (106) vorgesehen sind und an der Außenseite des Zwischenelements (130) in der Fahrzeugbreitenrichtung vorgesehen sind, um so nahe dem Paar aus linkem und rechtem Seitenkantenteil (100c, 100c) angeordnet zu sein,
wobei die Gaszuleitungsöffnung (150) an der Unterseite des Basiselements (100) vorgesehen ist, und
wobei die Gasaustrittsöffnung (152, 154, 156) an der Oberseite des Basiselements (100) vorgesehen ist.

2. Scheinwerfervorrichtung (10) nach Anspruch 1,
wobei das Zwischenelement (130) im Innenraum (114) angeordnet ist, um so einen Abstand (164) zwischen sich selbst und dem Reflektor (122) zu bilden.

3. Scheinwerfervorrichtung (10) nach einem der Ansprüche 1 oder 2,
wobei das Zwischenelement (130) eine Trennwand (146) an einer imaginären geraden Linie hat, die die Scheinwerferlichtquelle (106) und die Positionslichtlichtquelle (108) verbindet, und
die Trennwand (146) in abschirmender Weise verhindert, dass von der Scheinwerferlichtquelle (106) oder der Positionslichtlichtquelle (108) erzeugte Strahlungswärme direkt in Richtung einer anderen Lichtquelle weitergeleitet wird.

4. Scheinwerfervorrichtung (10) nach einem der Ansprüche 1 bis 3,
wobei die Scheinwerfervorrichtung (10) zwei Positionslichtlichtquellen (108, 108) besitzt,
wobei das Basiselement (100) in einer ungefähren konkaven schachtelartigen Form in einer seitlichen Schnittansicht betrachtet ausgebildet ist und ein unterer Bereich der konkaven Form des Basiselements (100) in einer Bogenform als eine rückseitige Wandkomponente (110) ausgebildet ist,
wobei die rückseitige Wandkomponente (110) an der Umfangskante davon mit dem oberen Kantenteil (100a) vorgesehen ist, der untere Kantenteil (100b) und die Seitenkantenteile (100c, 100c) sowie die rückseitige Wandkomponente (110) weiterhin mit einer Vielzahl von Gasaustrittsöffnungen (152, 154, 156) zum Ablassen von Luft aus dem Innenraum (114) vorgesehen sind,
wobei eine erste Gasaustrittsöffnung (152) an der Oberseite einer Befestigungsöffnung (120) vorgesehen ist, die in einem ungefähren mittigen Bereich der rückseitigen Wandkomponente (110) ausgebildet ist, und wobei eine zweite Gasaustrittsöffnung (154) und eine dritte Gasaustrittsöffnung (156) in der Nähe der Befestigungsöffnungen (124) der beiden Positionslichtlichtquellen (108, 108) vorgesehen sind, die in äußeren oberen Positionen des Basiselements (100) in der Fahrzeugbreitenrichtung vorgesehen sind.

## Revendications

1. Dispositif de phare (10) comprenant : un élément de base (100) sur lequel est disposée une source de lumière de feu avant (106) et une source de lumière de feu de position (108) ; une lentille (102) montée sur une partie avant dudit élément de base (100) ; un réflecteur (122) qui est disposé dans un espace interne (114) défini par ledit élément de base (100) et ladite lentille (102) et qui reflète la lumière émise par ladite source de lumière de feu avant (106) ; et un élément intermédiaire (130) qui recouvre ledit élément de base (100) au moins dans les environs dudit réflecteur (122) sur une vue de face,
dans lequel ledit élément intermédiaire (130) est prévu avec une découpe (144) qui permet à un gaz présent du côté de ladite lentille (102) par rapport audit élément intermédiaire (130) de s'écouler à travers cette dernière jusqu'au côté dudit élément de base (100) par rapport audit élément intermédiaire (130),
**caractérisé en ce que** :
une partie de bord supérieure (100a) de l'élément de base (100) est formée pour être creuse dans sa partie centrale, et les bords gauche et droit continus avec la partie centrale sont obliquement inclinés vers le haut,
une partie de bord inférieure (100b) de l'élément de base (100) est inférieure du point de vue de la largeur à la partie de bord supérieure (100a), et est peu à peu inclinée obliquement vers le haut le long des directions vers l'extérieur dans le sens de la largeur du véhicule, et
une paire de parties de bord latérales gauche et droite (100c, 100c) sont obliquement inclinées vers le bas le long des directions vers l'extérieur dans le sens de la largeur du véhicule à partir des parties supérieures (100d, 100d) continues avec la partie de bord supérieure (100a), sont pliées au niveau des parties d'extrémité latérales (100e, 100e) et sont obliquement inclinées vers le bas vers le centre, pour être continues avec la partie de bord inférieure (100b) ;
dans lequel ledit élément de base (100) a un trou d'alimentation en gaz (148, 150) pour prélever un gaz dans ledit espace interne (114) et un trou d'échappement de gaz (152, 154, 156) pour évacuer le gaz de l'intérieur dudit espace interne (114),
dans lequel ledit élément intermédiaire (130) garantit que le gaz prélevé dans ledit trou d'alimentation en gaz (148, 150) et déplacé du côté de ladite lentille (102), peut être guidé à travers ladite découpe (144) vers ledit trou d'échappement de gaz (152, 154, 156),
dans lequel deux découpes (144) sont prévues sur le côté supérieur de ladite source de lumière de feu avant (106) et sont prévues sur le côté externe de l'élément intermédiaire (130) dans le sens de la largeur du véhicule, afin d'être à proximité de la paire de parties de bord latérales gauche et droite (100c, 100c),
dans lequel ledit trou d'alimentation en gaz (150) est prévu sur le côté inférieur dudit élément de base (100), et
dans lequel ledit trou d'échappement de gaz (152, 154, 156) est prévu sur le côté supérieur dudit élément de base (100).

2. Dispositif de phare (10) selon la revendication 1,
dans lequel ledit élément intermédiaire (130) est disposé dans ledit espace interne (114) afin de former un espace (164) entre lui-même et ledit réflecteur (122).

3. Dispositif de phare (10) selon l'une quelconque des revendications 1 ou 2,
dans lequel ledit élément intermédiaire (130) a une paroi de séparation (146) sur une ligne droite imaginaire interconnectant ladite source de lumière de feu avant (106) et ladite source de lumière de feu de position (108), et
ladite paroi de séparation (146) empêche, par blindage, la chaleur rayonnante générée par ladite source de lumière de feu avant (106) ou ladite source de lumière de feu de position (108), d'être propagée directement vers une autre source de lumière.

4. Dispositif de phare (10) selon l'une quelconque des revendications 1 à 3,
dans lequel le dispositif de phare (10) possède deux sources de lumière de feu de position (108, 108),
dans lequel l'élément de base (100) est formé selon une forme de boîte approximativement concave sur la vue en coupe latérale et une partie inférieure de la forme concave de l'élément de base (100) est formée selon une forme arquée comme une partie de paroi latérale arrière (110),
dans lequel la partie de paroi latérale arrière (110) est prévue au niveau de son bord périphérique avec la partie de bord supérieure (100a), la partie de bord inférieure (100b) et les parties de bord latérales (100c, 100c) et la partie de paroi latérale arrière (110) est prévue en outre avec une pluralité de trous d'échappement de gaz (152, 154, 156) pour évacuer l'air de l'espace interne (114),
dans lequel un premier trou d'échappement de gaz (152) est prévu sur le côté supérieur d'un trou de montage (120), qui est formé dans une partie approximativement centrale de la partie de paroi latérale arrière (110), et
dans lequel un deuxième trou d'échappement de gaz (154) et un troisième trou d'échappement de gaz (156) sont prévus à proximité des trous de montage (124) des deux sources de lumière de feu de position (108, 108), qui sont prévues dans des positions supérieures externes dans le sens de la largeur du véhicule de l'élément de base (100).
